Europäisches Patentamt

European Patent Office

Office européen des brevets

(19)

(11) Veröffentlichungsnummer: **0 189 750**
**A2**

# (12) EUROPÄISCHE PATENTANMELDUNG

(21) Anmeldenummer: **86100082.6**

(22) Anmeldetag: **04.01.86**

(51) Int. Cl.⁴: **B 29 C 49/24**
**B 29 C 49/60**

(30) Priorität: **08.01.85 DE 3500347**

(43) Veröffentlichungstag der Anmeldung:
**06.08.86 Patentblatt 86/32**

(84) Benannte Vertragsstaaten:
**AT BE CH DE FR GB IT LI LU NL SE**

(71) Anmelder: **Herrmann, Helga-Margot**
**Turmstrasse 1**
**D-7156 Wüstenrot(DE)**

(72) Erfinder: **Herrmann, Helga-Margot**
**Turmstrasse 1**
**D-7156 Wüstenrot(DE)**

(74) Vertreter: **Jeser, Jean-Pierre**
**Lerchenstrasse 56**
**D-7100 Heilbronn(DE)**

(54) **Verfahren zum Herstellen eines Hohlkörpers mit mehrschichtiger Aussenwandung.**

(57) Ein Hohlkörper kann dadurch universell auch zum mehrfachen Verwenden als Mehrwegverpackung eingesetzt werden, daß er aus mehreren ineinandergeschachtelten Behältern hergestellt wird. Dies läßt sich auf einfache Weise dadurch erreichen, daß innerhalb eines jeweils äußeren Behälters ein zu diesem äußeren Behälter innerer Behälter mit Hilfe einer Kunststoff-Blasanlage hergestellt wird, wobei der jeweils äußere Behälter die Form für den jeweils inneren Behälter darstellt.

EP 0 189 750 A2

## BESCHREIBUNG

Verfahren zum Herstellen eines Hohlkörpers
mit mehrschichtiger Außenwandung

### TECHNISCHES GEBIET

Die Erfindung betrifft ein Verfahren zum Herstellen eines Hohlkörpers mit mehrschichtiger Außenwandung und zumindest einer Öffnung, bei dem der innere Behälter aus thermoplastischem Kunststoff nach dem Blasverfahren hergestellt wird. Die Erfindung betrifft weiterhin ein Verfahren zum Herstellen eines derartigen Behälters, bei dem auch die Außenwandung nach dem Blasverfahren hergestellt wird.

Hohlkörper werden in den vielfältigsten Formen als Flaschen, Eimer, Dosen, Fässer und dergleichen für Verpackungszwecke verwendet.

### STAND DER TECHNIK

Es gibt Hohlkörper als Verpackungsbehälter, die mehrfach als Transport- oder Lagerbehältnis benutzt werden. Sogenannte Mehrwegverpackungen sind beispielsweise in der Getränkeindustrie in Form von Glasflaschen oder Aluminiumfässer gebräuchlich. In der Milchindustrie werden allerdings überwiegend Pappbehältnisse verwendet, obwohl sich Glasflaschen ansich auch hier als Mehrwegverpackungen eignen würden. Ein wichtiger Grund dafür, daß Glasflaschen und damit Mehrwegbehältnisse kaum benutzt werden, sind die hohen Reinigungskosten, die bei der Wiederverwendung von benutzten Glasflaschen auftreten; eingetrocknete Milch ist nur sehr schwer wieder aus dem Flascheninneren zu entfernen. Dies trifft auch für viele andere Stoffe zu, so daß von industrieller Seite her überwiegend sogenannte Einwegverpackungen bevorzugt werden.

In den letzten Jahren tritt das Problem der Müllbeseitigung immer drängender in der Vordergrund, da geeigneter Lagerraum immer knapper wird. Mehrwegverpackungen können im Gegensatz zu Einwegverpackungen hier für eine gewisse Entspannung sorgen.

Während für Glasbehältnisse eine Mehrfachverwendung möglich ist, ist eine solche bei Behältnissen aus z. B. Kunststoff z. Zt. weitgehend unmöglich. Kunststoff ist ein Material, das im Unterschied zu Glas mit vielen Stoffen chemisch reagiert. Abgesehen von den auch bei Kunststoffbehältern hohen Reinigungskosten, scheidet daher bereits oftmals aus technischen Gründen eine Mehrfachverwendung aus.

Bei Behältnissen aus Kunststoff tritt als weiteres Problem auf, daß sie nicht in allen Fällen vollständig undurchlässig sind, sondern daß der Behälterinhalt durch die aus Kunststoff bestehende Behälteraußenwand hindurchdiffundieren kann. Bei Inhalten, die aus mehreren chemischen Komponenten zusammengesetzt sind, kann so beispielsweise der Falle eintreten, daß ein aus einem bestimmten Kunststoffmaterial bestehender einschichtiger Behälter gegenüber der einen Komponente dicht und gegenüber der anderen Komponente durchlässig ist. Für ein anderes Kunststoffmaterial kann dies genau umgekehrt sein. Für derartige Inhalte sind daher einschichtige Kunststoffbehälter ungeeignet.

Um in diesen letzteren Fällen auf den Einsatz von Kunststoff nicht verzichten zu müssen, da die Verwendung von Kunststoff trotz der in den letzten Jahren stark gestiegenen Energiekosten wegen seines geringen Gewichts und den mit diesem geringen Gewicht verbundenen niedrigen Lagerungs- und Transportkosten wirtschaftlich nach wie vor interessant ist, ist es bekannt, auf die Innenwand von Kunststoffbehältern eine Dichtungsschicht aus Kunststoff als sogenannte Barriereschicht aufzusprühen. Die dabei verwendeten Substanzen sind allerdings für die menschliche Gesundheit schädlich, so daß der Verwendungszweck derartiger Kunststoffbehälter stark eingeschränkt ist.

Es ist darüberhinaus bekannt, mehrschichtige Hohlkörper mit Hilfe des Coextrusions-Blasverfahrens herzustellen. Mit diesem in den letzten zehn Jahren entwickelten Verfahren können die Barriereeigenschaften von Hohlkörpern gezielt verbessert werden. Das Verfahren ist allerdings technisch recht kompliziert, so daß es nur in auf Kunststoffverarbeitung ausgerichteten Spezialbetrieben angewendet wird. In weiterverarbeitenden Industriebetrieben wie Abfüllbetrieben wird daher weiterhin nur das vergleichsweise unkomplizierte Extrusions-Blasverfahren angewendet. Von Nachteil ist weiterhin, daß mit Hilfe des Coextrusions-Blasverfahrens nur relativ kleine Behälter bis etwa gut 1 ltr. Inhalt hergestellt werden können; aufgrund der unterschiedlichen Materialschichten treten beim geblasenen Behälter unterschiedlich hohe Spannungen auf, die die Haltbarkeit der Boden- und Kopfnaht eines derartig hergestellten Behälters beeinträchtigen

Aus der DE-OS 14 79 011 ist ein mit Hilfe des Extrusions-Blasverfahrens hergestellter doppelwandiger Hohlkörper bekannt. Der Außenbehälter ist aber kein "Behälter", da in ihm siebartige Durchbohrungen vorhanden sind, durch die die beim Aufblasen des Innenbehälters verdrängte Luft abgesaugt wird. Auf diese Durchbohrungen kann auch nicht verzichtet werden, da die verdrängte Luft an keiner anderen Stelle aus dem Inneren des äußeren Behälters entweichen kann.

Derartige Durchbohrungen weisen die aus der US-PS 3,816,578 und aus der US-PS 3,091,000 bekannten Behälter nicht auf. Bei dem aus der US-PS 3,816,578 bekannten Herstellungsverfahren fährt der Blaskopf, der gleichzeitig auch Extruderkopf ist, beim Aufblasen des Behälters voll in den äußeren Behälter hinein. Dies bedeutet, daß bei unterschiedlich hohen Behältern der Extruder- bzw. Blaskopf unterschiedlich weit vertikal verfahren werden muß. Dies ist auch bei der Herstellung des aus der US-PS 3,091,000 bekannten Behälters der Fall. Hier wird außerdem der Vorformling im Spritzblasverfahren hergestellt. Beim Spritzblasverfahren fallen gegenüber dem Extrusionsblasen wesentlich höhere Werkzeugkosten an, da außer den Blas-

-4-

werkzeugen auch noch Spritzwerkzeuge erforderlich sind. Der Einsatz dieses Verfahrens ist weiterhin dadurch begrenzt, daß bei sehr schlanken Vorformlingen der Spritzgießkern infolge der sehr hohen Spritzdrücke leicht verbogen werden kann. Die gleiche Schwierigkeit tritt auch bei sehr schlanken Außenbehältern auf. Beim Spritzgießen ist eine Änderung des Hohlkörpergewichtes nur über eine Änderung des Spritzgießwerkzeuges selber erreichbar. Auch eine Änderung der Wanddicke des Vorformlings entsprechend einer in der Höhe unterschiedlichen Form des Außenbehälters erfordert ebenfalls Eingriffe in die Werkzeuggestaltung.

## DARSTELLUNG DER ERFINDUNG

Ausgehend von diesem Stand der Technik liegt der Erfindung die Aufgabe zugrunde, ein einfaches Verfahren zum Herstellen von beliebig geformten und beliebig großen Hohlkörpern mit mehrschichtiger Außenwandung anzugeben.

Das erfindungsgemäße Verfahren ist durch die Merkmale des Anspruchs 1 und durch die Merkmale des nebengeordneten Anspruchs 2 gegeben. Der bei diesem Verfahren bevorzugt verwendete erfindungsgemäße Blasdorn ist durch die Merkmale des Anspruchs 11 gegeben.

Das erfindungsgemäße Verfahren zeichnet sich dementsprechend für einen Hohlkörper mit einer Außenwandung aus beliebigem Material durch die Merkmale des Anspruchs 1 aus. Die Merkmale entsprechend Anspruch 2 betreffen einen Hohlkörper mit mehrschichtiger Außenwandung, bei dem auch die Außenwandung nach dem Blasverfahren hergestellt wird.

Weitere Ausgestaltungen der erfindungsgemäßen Verfahren sind in den Unteransprüchen angegeben.

Ausgehend von der Erkenntnis, daß dadurch, daß die Innenwandung von Verpackungsbehältern nicht mehr mit Füllstoffen direkt in Verbindung kommt, und sich die Reinigungskosten solcher Behälter dadurch so stark vermindern, daß in der Industrie ein verstärkter Anreiz zur Verwendung von Mehrwegbehältnissen entsteht, insbesondere auch bei Behältnissen aus Kunststoff, stellen die erfindungsgemäßen Verfahren eine sehr einfache Möglichkeit dar, ineinandergeschachtelte Behälter herzustellen. Bei der Verwendung derartiger Behältnisse als Mehrfachverpackung tritt der Vorteil ein, daß nur noch der innerste Behälter mit dem Füllgut in Berührung kommt und somit gleichsam als Einwegverpackung dient. Die Wandung dieses innersten Behälters kann aber sehr dünn sein, so daß der Vorteil, der in der mehrfachen Verwendung des "Außen"-Behälters liegt, kaum negativ beeinflußt wird.

Durch die Wahl unterschiedlicher Materialsorten für die einzelnen ineinandergeschachtelten Behälter kann erreicht werden, daß sich das Behältnis insgesamt gegenüber jedem Inhalt als dicht erweist; jede Behälterwand kann nämlich aus einem derartigen Material sein, daß sie gegen eine ganz bestimmte chemische Komponente undurchlässig ist. Im Gegensatz zu dem bekannten Coextrusions-Blasverfahren kann der innere Behälter lösbar an dem äußeren Behälter befestigt sein. Diese Möglichkeit wird dadurch vergrößert, daß die Innenseite des äußeren Behälters zumindest teilweise mit einer Schicht versehen wird, die ein Aneinanderhaften der beiden ineinandergeschachtelten Behältern verhindert. Dies ist infolge des nacheinander ablaufenden Herstellvorganges des mehrschichtigen Behälters möglich. Im Gegensatz dazu, wenn es auf die Undurchlässigkeit aller Wandungen der ineinandergeschachtelten Behältern ankommt, kann es vorteilhaft sein, die Innenseite der äußeren Behälter zumindest teilweise mit einer Schicht zu versehen, die ein Aneinanderhaften der einzelnen Wandungen fördert.

Um sicherzustellen, daß sich der Vorformling innerhalb eines äußeren Behälters von der Bodenfläche dieses Behälters aus beim Aufblasen ausdehnt, um so der zwischen dem Vorformling und dem äußeren Behälter befindlichen, beim Aufblasen verdrängten Luft ein Entweichen nach oben durch die Halsöffnung hindurch zu ermöglichen, ist nach einem weiteren Merkmal der Erfindung die Wandstärke im unteren Bereich des Vorformlings

dünner als in seinem oberen, der Halsöffnung des Behälters benachbarten Bereich. Der Vorformling wird sich nämlich im Bereich mit seiner jeweils dünnsten Wandstärke immer zuerst ausdehnen. Die Wanddicke läßt sich während des Extrudiervorganges beliebig einstellen und verändern; sei es durch Variation der Düsenöffnung, sei es durch Verändern der Extrudiergeschwindigkeit.

Die Möglichkeit zur Entlüftung durch die Halsöffnung des Behälters hindurch läßt sich auf überraschend einfache Weise auch dadurch sicherstellen, daß der aus dem Extrusionskopf austretende Kunststoffschlauch durch eine entsprechend geformte Extrusionsdüse mit auf seiner Außen- und/oder Innenfläche in Extrusionsrichtung verlaufenden rillenartigen Vertiefungen versehen wird.

Durch festes Anbringen eines magnetisierbaren Teilchens am inneren Behälter an einer von außen zugänglichen Stelle können mit Hilfe eines Magneten einerseits Behälter gemäß der Erfindung von anderen Behältern problemlos entdeckt und aussortiert werden, und andererseits der innere Behälter auch automatisch aus dem äußeren Behälter herausgezogen werden. Die Kosten für eine Wiederverwertung des äußeren Behälters können auf diese Weise in wirtschaftlich vertretbarem Rahmen gehalten werden.

Der bei diesem erfinderischen Verfahren bevorzugt verwendete Blasdorn weist neben dem Luftzuführkanal zumindest einen weiteren Kanal auf, der mit seinem einen Ende in Stichleitungen endet, die quer durch den Dorn hindurch nach außen führen, und der mit seinem anderen Ende mit einer Einrichtung zum Ansaugen von Luft verbunden ist. Nach einer vorteilhaften Weiterbildung dieses Blasdorns enden die Stichleitungen in zumindest einer Ringleitung, die mit diesem Kanal verbunden ist.

## KURZE BESCHREIBUNG DER ZEICHNUNG

Die Erfindung wird im folgenden anhand der in der Zeichnung dargestellten einzelnen Verfahrensschritten zum Herstellen von Hohlkörpern der eingangs genannten Art beschrieben und erläutert. Die der Beschreibung und der Zeichnung zu entnehmenden Merkmale können bei anderen Ausführungsformen der Erfindung einzeln für sich oder zu mehreren in beliebiger Kombination angewendet werden. Es zeigen:

Fig. 1 ein von einem Extrusionskopf einer Kunststoff-Blasanlage zwischen zwei im Abstand voneinander angeordneten Formteilen angetriebenen Kunststoffschlauch,

Fig. 2 den von den Formteilen eingeschlossenen und vom übrigen Schlauch abgetrennten sowie unter einer Blasformstation der Kunststoff-Blasanlage positionierter Schlauch,

Fig. 3 den mittels eines Blasdornes durch die Blasformstation zu einem äußeren Behälter geblasenen Schlauch,

Fig. 4 dem mit einem in sein Inneres eingeführten Vorformling versehenen, unter einem weiteren Extrusionskopf der Kunststoff-Blasanlage positionierten äußeren Behälter,

Fig. 5 den mit dem Vorformling versehenen, unter einer weiteren Blasformstation positionierten äußeren Behälter,

Fig. 6 einen aus dem äußeren Behälter und aus einem aus dem Vorformling geblasenen inneren Behälter bestehenden Hohlkörper,

Fig. 7 einen Vorformling ähnlich dem in Fig. 5, dessen Wandstärke im unteren Bereich dünner als in seinem oberen Bereich ist, sowie einen Blasdorn, der mit zusätzlichen Saugkanälen versehen ist, wobei der Vorformling mit einem Außengewinde ausgestattet wird,

Fig. 8 eine Darstellung ähnlich der in Fig. 7, mit zusätzlich im Halsbereich des äußeren Behälters vorhandener Hülse, die als Abstandshalter zwischen dem äußeren Behälter und dem Vorformling dient,

Fig. 9 eine Schnittansicht der in Fig. 8 dargestellten Hülse,

Fig. 10 eine Darstellung ähnlich der in Fig. 8, bei der der Vorformling aber nicht nach oben aus dem äußeren Behälter herausragt, so daß dadurch nicht er, sondern der äußere Behälter mit einem Außengewinde ausgestattet wird,

Fig. 11 eine Verschlußvorrichtung für den in Fig. 10 dargestellten Behälter, mit einer gegenüber der Darstellung in Fig. 10 abgewandelten Hülse,

Fig. 12 einen mit Längsrillen versehenen extrudierten Kunststoffschlauch, und

Fig. 13 ein in den Halsbereich des inneren Behälters nach Fig. 7 von außen fest angebrachtes, magnetisierbares Teilchen.

## WEGE ZUR AUSFÜHRUNG DER ERFINDUNG

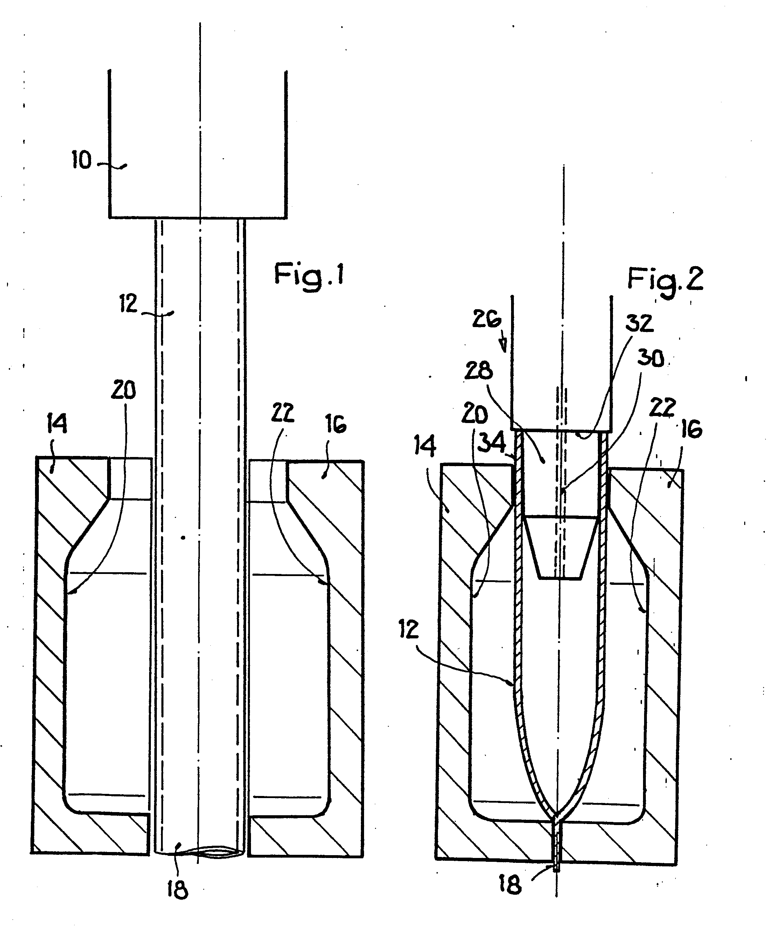

In den Fig. 1, 2 und 3 ist eine an sich bekannte Herstellung eines Kunststoffbehälters mit Hilfe einer Kunststoff-Blasanlage schematisch dargestellt.

Aus einem Extrusionskopf 10 tritt kontinuierlich ein Kunststoffschlauch 12 aus. Seitlich vom Schlauch sind zwei Formteile 14, 16 angeordnet. Sobald der untere Schlauchbereich 18 aus dem Extrusionskopf kommend die beiden Formteile vollständig passiert hat, werden die beiden Formteile aufeinander zubewegt, wobei sie den unteren Schlauchbereich 18 mit ihren unteren Enden zwischen sich einklemmen. Der Schlauch wird nun oberhalb der Formteile vom übrigen, aus dem Extrusionskopf weiterhin austretenden Schlauch abgetrennt und zusammen mit den geschlosenen beiden Formteilen 14, 16 unterhalb einer Blasformstation 26 positioniert (Fig. 2).

Die Blasformstation 26 besitzt einen Blasdorn 28, der sich mit einer umlaufenden Schulter 32 an dem oberen Schlauchbereich 34 des Schlauches 12 dichtend anlegt. Durch einen, im Inneren des Blasdorns 28 vorhandenen Blaskanal 30 wird nun Druckluft in den an seinem unteren Ende verschlossenen Schlauch 12 eingeblasen. Der Schlauch 12 legt sich dadurch mit seiner Außenseite an den Innenseiten 20, 22 der Formteile 14, 16 an.

Anschließend werden die Formteile 14, 16 voneinander wegbewegt, der zu einem Behälter 40 geblasene Schlauch 12 von seinem oberen Schlauchbereich 34 abgetrennt und der Blasdorn 28 aus der Öffnung des Behälters 40 wieder herausgezogen. Anschließend wird das gequetschte Kunststoffmaterial 42 am Behälterhals sowie 44 am Behälterboden vom Behälter 40 entfernt.

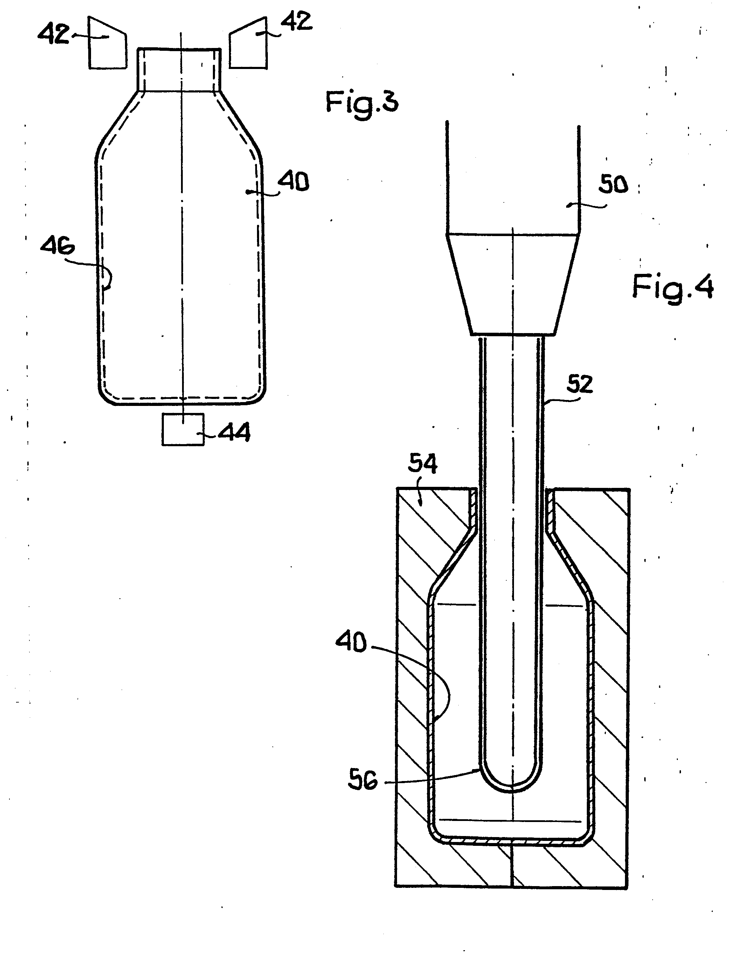

Der Behälter 40 wird nun unterhalb eines weiteren Extrusionskopfes 50 positioniert. In den Behälter 40 wird dann ein aus dem Extrusionskopf 50 austretender Vorformling hineingesenkt (Fig. 4), bis der untere Bereich 56 des Vorformlings 52 den Boden des Behälters 40 erreicht hat. Nachdem anschließend dieser Vorformling oberhalb des Behälters 40 vom weiterhin aus dem Extrusionskopf austretenden Kunststoffschlauch abgetrennt ist, wird der Behälter 40 unterhalb einer weiteren Blasformstation 60 der Kunststoff-Blasanlage positioniert. Der Behälter 40 ist dabei von enem Formteil 54 stützend umgeben.

Ähnlich wie bei der Darstellung gemäß Fig. 2 legt sich auch hier an den oberen Bereich 68 des Vorformlings 52 eine Schulter 66 eines Blasdorns 62 dichtend an. Durch einen Blaskanal 64 im Inneren des Blasdorns 62 wird nun Druckluft in den Vorformling 52 derart hineingeblasen, daß sich der Vorformling gegen die Innenseite 46 des Behätlers 40 anlegt. Der Vorformling wird nun oberhalb des Behälters 40 vom übrigen Schlauchbereich abgetrennt und der Blasdorn aus der Öffnung des Behälters 40 und des zu einem inneren Behälter 82 geblasenen Vorformlings 52 herausgezogen.

Nach Freigabe durch das Formteil 54 ist ein Hohlkörper 80 hergestellt, der aus einem äußeren Behälter 40 und einem inneren
Behälter 82 besteht. Der Hohlkörper 80 weist damit eine zweischichtige Außenwandung auf.

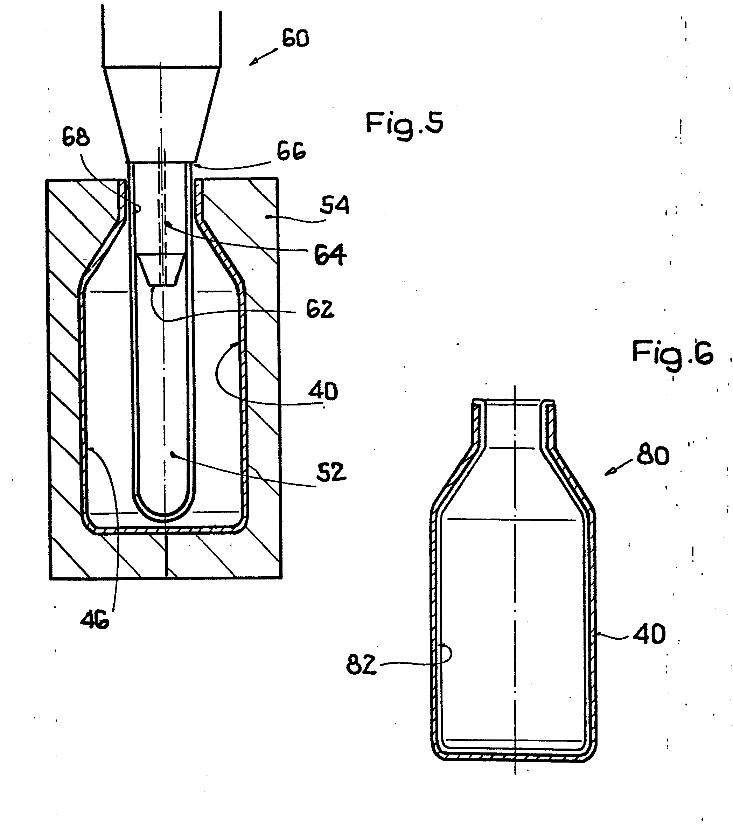

Sofern der Hohlkörper 80 mit einer weiteren Innenwandung versehen werden soll, kann mit Hilfe eines weiteren Extrusionskopfes ein weiterer Vorformling in das Innere des Hohlkörpers
80 hineingesenkt und dort mit Hilfe einer weiteren Blasformstation zu einem weiteren Innenbehälter geblasen werden, entsprechend der Darstellung in den Fig. 4 und 5.

Durch aus den Extrusionsköpfen 10, 50 austretenden unterschiedlichen Kunststoffschläuchen, was Material, Querschnittsabmessungen sowie Austrittsgeschwindigkeit betrifft, lassen
sich Hohlkörper herstellen, deren ineinandergeschachtelte Behälter unterschiedlich dick sowie aus unterschiedlichem Material sind.

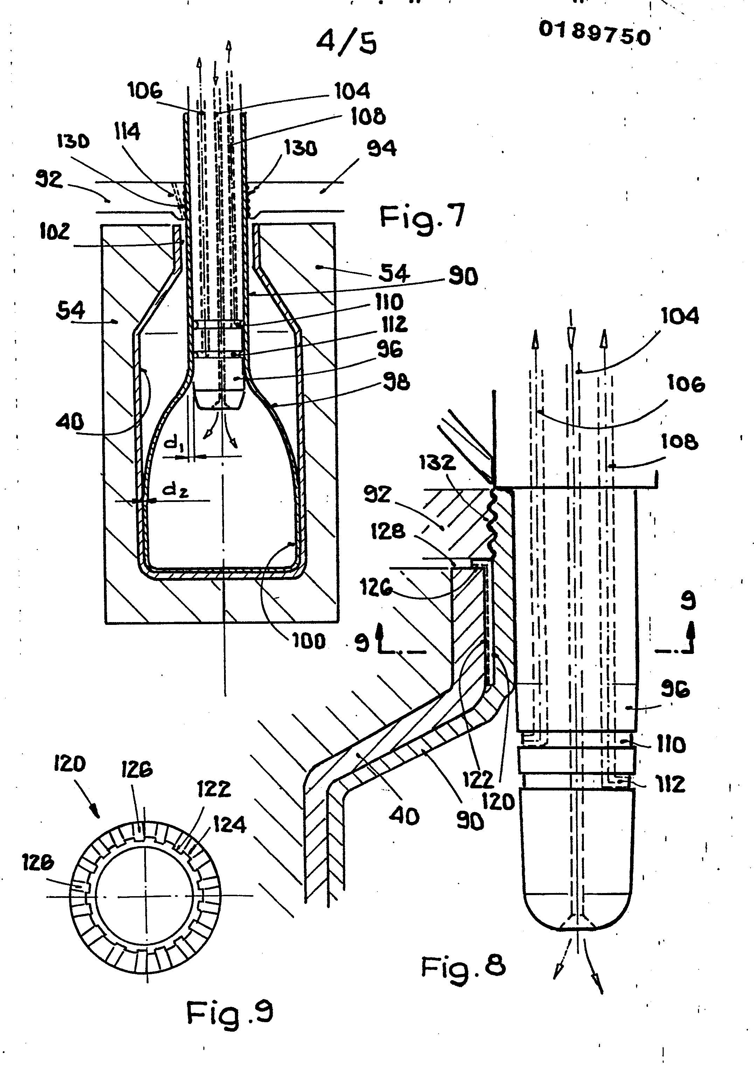

Bei der Darstellung gemäß Fig. 7 wird ebenfalls wie bei der
Darstellung gemäß Fig. 5 in den äußeren Behälter 40 ein innerer Behälter hineingeblasen.

Dieser innere Behälter wird aus einem Vorformling 90 hergestellt, der z. B. aus dem Extrusionskopf 50 (Fig. 4) herausextrudiert worden ist. Dieser Vorformling 90 wurde nach seinem Herausextrudieren von den Haltebacken 92, 94 umfaßt und
vom übrigen Schlauchbereich abgetrennt. Anschließend wurde
der Vorformling 90 in den äußeren Behälter 40 hineingetaucht.
Anschließend daran wurde bei der Darstellung gemäß Fig. 5 der
Blasdorn 62 in den Vorformling 52 bzw. bei der Darstellung
gemäß Fig. 7 der Blasdorn 96 in den Vorformling 90 hineingeführt.

Der Vorformling 90 unterscheidet sich vom Vorformling 52 darin, daß die Wandstärke in seinem oberen Bereich 98 dicker ist als in seinem unteren Bereich 100. Diese veränderliche, vom unteren Bereich 100 nach oben hin mehr oder weniger kontinuierlich zunehmende Wandstärke läßt sich dadurch erzielen, daß beim Extrudieren des Kunststoffschlauches bzw. des Vorformlings 90 entweder der Düsenspalt des Extrusionskopfes vergrößert oder die Extrusionsgeschwindigkeit verkleinert wird. Da sich der Vorformling 90 in den Bereichen mit einer dünneren Wandstärke eher ausdehnen wird als in Bereichen mit einer dickeren Wandstärke, wird dadurch erreicht, daß beim Aufblasen des Vorformlings 90 innerhalb des äußeren Behälters 40 (Fig. 7) sich der Vorformling zunächst im unteren, dem Boden benachbarten Bereich an den äußeren Behälter 40 von innen anlegt, so daß die zwischen dem Vorformling 90 und dem äußeren Behälter 40 vorhandene Luft während des Aufblasvorganges des Vorformlings 90 nach oben durch den Ringspalt 102 nach außen entweichen kann.

Die unterschiedlichen Wandstärken des Vorformlings 90, d2 im unteren Bereich 100 bzw. d1 im oberen Bereich 98, hängen von der inneren Oberflächenform des äußeren Behälters 40 ab. Bei sehr niedrigen äußeren Behältern und dazu sehr kurzer Halspartie kann die Wandstärke praktisch überall gleich dick sein, im Unterschied zu sehr schlanken und mit einer langgestreckten Halspartie ausgebildeten äußeren Behältern.

In dem Blasdorn 96 sind neben dem Blaskanal 104 weitere Kanäle 106, 108 vorhanden. Diese Kanäle 106, 108 münden im unteren Bereich des Blasdorns 96 in jeweils einem Ringkanal 110, 112. Die Kanäle 106, 108 sind mit einer in der Zeichnung nicht dargestellten Luftansaugeinrichtung verbunden. Durch Ansaugen von Luft durch diese Kanäle 106, 108 hindurch wird der am Dorn anliegende Bereich des Vorformlings 90 an den Blasdorn 96 herangesaugt. Durch gleichzeitiges Aufblasen des Vorformlings 90 durch den Blaskanal 104 hindurch wird damit der Effekt des sich von unten her ausdehnenden Vorformlings 90 gefördert. Sobald der Vorformling in etwa die in Fig. 7 dargestellte Form erreicht hat, wird das Ansaugen beendet, so daß

-12-

auch der übrige Bereich des Vorformlings 90 ausgedehnt werden kann. Das Beenden des Ansaugens kann in allen Kanälen gleichzeitig oder auch mit dem untersten Ringkanal beginnend erfolgen. Die Ringkanäle können dabei im gesamten Bereich des Blasdorns 96, und damit vorzugsweise auch in dem Bereich, der sich innerhalb der schmalen Halsöffnung des Behälters befindet, angeordnet sein. Dies hat den Vorteil, daß der Vorformling 90 auch im Bereich des Ringspaltes 102 dicht an dem Blasdorn 96 während des Blasvorganges anliegt, so daß die Luft ungehindert durch den Ringspalt 102 nach außen entweichen kann.

In der Haltebacke 92 ist ein Kanal 114 vorhanden, durch den die aus dem Ringspalt 102 austretende Luft weiter nach außen entweichen kann. Zusätzlich dazu kann die aus dem Ringspalt 102 entweichende Luft auch durch den zwischen den Haltebacken 92, 94 und den Formteilen 54 vorhandenen Spalt 116 nach außen entweichen. Selbstverständlich kann der Kanal 114 auch in der Haltebacke 94 vorhanden sein.

Bei der Darstellung in Fig. 8 ist der Ringspalt 102 (Fig. 7) von einer Hülse 120 ausgefüllt. Der Vorformling 90 liegt damit mit seiner Außenseite an der Hülse 120 dicht an. In dieser Hülse 120 sind auf deren dem äußeren Behälter 40 zugewandten Außenseite von unten nach oben verlaufende Rillen 122 eingeformt, so daß die Hülse 120 nicht vollflächig, sondern nur mit ihren Anlageflächen 124 an dem äußeren Behälter 40 anliegt. Durch die Rillen 122 kann beim Aufblasen die zwischen dem inneren Behälter 90 und dem äußeren Behälter 40 vorhandene Luft nach außen hin entweichen.

Die Hülse 120 besitzt an ihrem oberen Ende einen abgewinkelten Bereich 126, mit dem sie auf der Stirnfläche 128 des äußeren Behälters 40 aufliegt. Die Rillen 122 sind im abgewinkelten Bereich ebenfalls rechtwinklig nach außen herumgeführt, so daß auch der abgewinkelte Bereich 126 wie der übrige Hülsenbereich nur teilweise an dem äußeren Behälter 40 aufliegt.

Bei den Darstellungen in den Fig. 7 und 8 ragt der innere
Behälter 90 oben aus dem Hals des äußeren Behälters 40
heraus. In diesem herausragenden Bereich ist der innere Behälter 90 mit einem Außengewinde/versehen, das durch entsprechend ausgeformte Formflächen 130 der Haltebacken 92, 94 hergestellt ist; beim Einfahren des Blasdorns 96 durch die Haltebacken 92, 94 hindurch in den äußeren Behälter 40 hinein
drückt der Blasdorn 96 den Vorformling nach außen und erzeugt
dabei das Außengewinde 192 (Fig. 8).

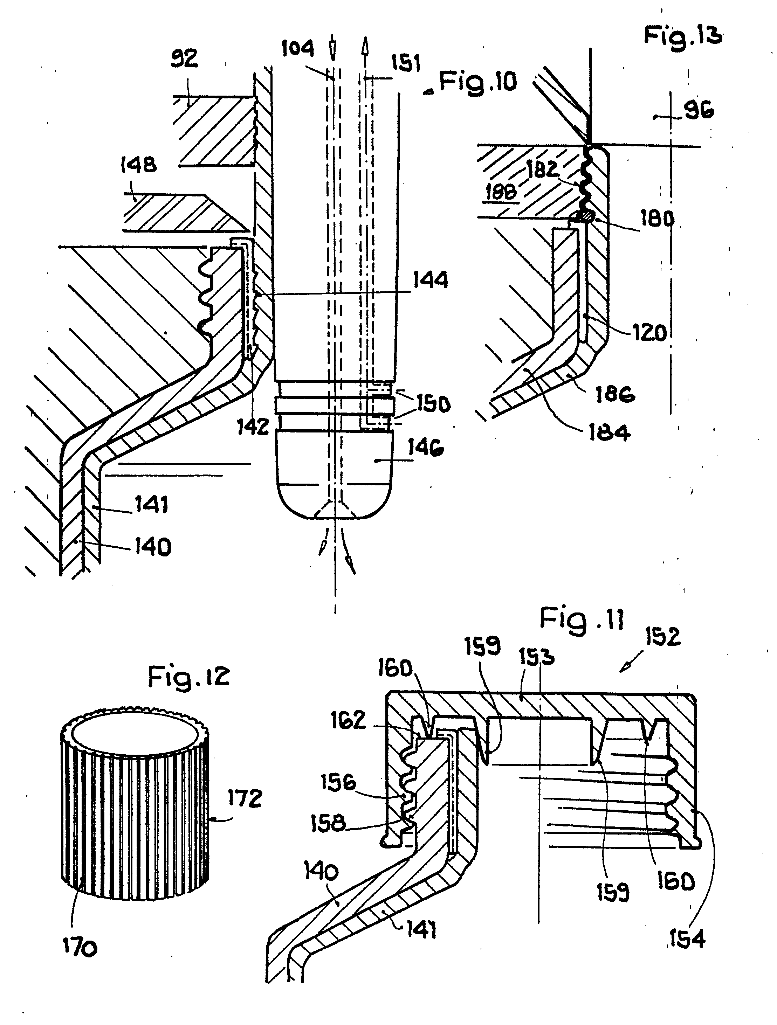

Bei der Darstellung gemäß Fig. 10 ist dieses Außengewinde am
äußeren Behälter 140 angebracht. Ebenso wie in der Fig. 8 ist
auch hier zwischen dem äußeren Behälter und dem inneren Behälter eine Hülse 142 vorhanden. Diese Hülse besitzt ebenfalls
wie die Hülse 120 Luftaustrittskanäle, die ein Entweichen der
Luft aus dem Zwischenraum zwischen dem äußeren Behälter und
dem inneren Behälter nach außen ermöglichen. Die innere Oberfläche dieser Hülse 142 ist mit Vorsprüngen 144 ausgestattet,
die sich beim Einfahren eines Blasdorns 146 in die Wandung
des Vorformlings 90 eingraben.

Während beim Einfahren des Blasdorns 96 der Vorformling 90 im
Bereich der Haltebacken 92, 94 oberhalb des Gewindebereiches
abgetrennt wird, wird bei der Darstellung gemäß Fig. 10 der
Vorformling 90 oberhalb der Hülse 142 durch zusätzlich
vorhandene Schneiden 148 abgetrennt. Diese Schneiden 148 fahren unterhalb der Haltebacken 92 seitlich gegen den Blasdorn
146 und quetschen dadurch den Vorformling 90 ab. Dadurch
steht der innere Behälter nicht aus der Halsöffnung nach oben
heraus. Dadurch, daß sich die Vorsprünge 144 der Hülse 142 in
den Vorformling 90 eingraben wird verhindert, daß der Vorformling 90 und damit der innere Behälter später eventuell nach
seinem Erkalten nach unten in den Innenraum des Behälters hineinrutschen könnte.

Der Blasdorn 146 unterscheidet sich vom Blasdorn 96 dadurch,
daß seine Ringkanäle 150 an demselben Saugkanal 151 angeschlossen sind.

Im Bereich seiner gemeinsamen Öffnung ist der äußere Behälter 140 und damit auch der innere Behälter 141 durch einen Schraubverschluß 152 verschlossen (Fig. 11). Der Schraubverschluß besteht aus einer Deckelplatte 153, an die eine nach unten auskragende, umlaufende Seitenwand 154 angeschlossen ist. Die Seitenwand 154 besitzt ein Innengewinde 156, das mit dem Aussengewinde 158 des äußeren Behälters 140 in Eingriff steht.

Auf der Unterseite der Deckelplatte 153 ist ein innerer Ansatzkranz 159 vorhanden. Die Außenfläche dieses Kranzes 159 besitzt die Form eines sich nach unten hin verjüngenden Kegelstumpfes. Je nachdem, wie weit der Schraubverschluß 152 auf den äußeren Behälter 140 aufgeschraubt ist, legt sich der Kranz 159 mehr oder weniger stark pressend an den oberen Randbereich des inneren Behälters 141 an. Damit ist das Innere des inneren Behälters 141 und damit auch des äußeren Behälters 140 dicht verschlossen.

Auf der Deckelplatte 153 ist außerhalb des inneren Ansatzkranzes 159 ein weiterer Ansatzkranz 160 vorhanden, der sich beim Auschrauben auf den äußeren Behälter 140 von oben auf die Stirnseite 162 des äußeren Behälters 140 dichtend anlegt. Dadurch wird verhindert, daß durch das Gewinde hindurch von außen Schmutz in das Innere eindringen kann.

In bevorzugter Weise ist das Material zumindest des inneren Ansatzkranzes härter als das Kunststoffmaterial des inneren Behälters 141, so daß sich der innere Kranz 159 beim Aufschrauben etwas in den inneren Behälter 141 hineingräbt. Dadurch wird eine gute Abdichtung des Behälterinnenraumes nach außen hin erreicht.

Um der beim Aufblasen des inneren Behälters verdrängten Luft ein leichtes Entweichen nach oben hin aus dem Hals des äußeren Behälters heraus zu ermöglichen, ist nach einem weiteren Merkmal der Erfindung der aus dem Extrusionskopf jeweils herausextrudierte Schlauch mit Längsrillen versehen. Dies kann durch eine entsprechend geformte Düse des Extrusionskopfes problemlos erfolgen. Bei der Darstellung in Fig. 12 befinden
sich diese Längsrillen 170 auf der Außenseite des Schlauches
172. Ein derartiger Schlauch 172 wäre demnach zum Herstellen
eines inneren Behälters gut geeignet. Anstatt den für die Herstellung eines inneren Behälters vorgesehenen Schlauch 172
auf seiner Außenseite mit Längsrillen zu versehen, kann umgekehrt auch die Innenseite des äußeren Behälters mit Längsrillen versehen sein. Dazu muß die Düse des Extrusionskopfes so
ausgebildet sein, daß nicht die Außenseite des Schlauches,
sondern die Innenseite desselben mit Längsrillen versehen
wird. Die Längsrillen sind in dem extrudierten Schlauch so
stark auszubilden, daß beim Aufblasen des Schlauches die
Rillen nicht vollständig verschwinden.

Die vorstehend beschriebenen erfindungsgemäßen doppelwandigen
Behälter haben den Vorteil, daß die Innenwandung nach Gebrauch des gesamten Behälters wieder aus dem äußeren Behälter
herausgelöst werden kann. Dadurch kann der äußere Behälter,
der im Regelfall nicht mit dem Füllgut in Verbindung kommt,
ohne aufwendiges Reinigen wieder verwendet werden. Aufwendig
könnte allerdings das Aussortieren dieser erfindungsgemäßen
doppelwandigen Behälter von anderen Behältern sein. Um beim
Sortieren die Hilfe von Magneten benutzen zu können, besitzt
der innere Behälter ein magnetisierbares Teilchen, das von
außen zugänglich ist.

Ein derartiges magnetisierbares Teilchen 180 ist im Bereich
des Außengewindes 182 des aus dem äußeren Behälter 184 herausschauenden Teils des inneren Behälters 186 eingeformt. Das
Teilchen 180 kann dabei vor dem Zusammenfahren der Haltebakken 188 in dieselben eingelegt werden, so daß beim Zusammenfahren der Haltebacken 188 an den den inneren Behälter 186
bildenden Vorformling sich das Teilchen 180 in diesen Vorformling von außen teilweise eingräbt. Das Teilchen 180 ist dabei
in bevorzugter Weise Teil eines Ringes.

Statt dieses zusätzlichen Teilchens 180 kann auch die Hülse
120, 142 zumindest im Bereich ihres oben frei zugänglichen Bereiches 126 magnetisierbar ausgebildet sein.

Mit Hilfe eines Magneten kann damit der innere Behälter und gegebenenfalls zugleich die Hülse 142 aus dem äußeren Behälter herausgezogen werden.

ANSPRÜCHE

1. Verfahren zum Herstellen eines Hohlkörpers mit mehrschichtiger Außenwandung und zumindest einer Öffnung, bei dem der innere Behälter aus thermoplastischem Kunststoff nach dem Blasvefahren hergestellt wird,

d a d u r c h   g e k e n n z e i c h n e t ,   daß anschließend und nacheinander

a) ein aus einem Extrusionskopf der Blasanlage ausgetretener Kunststoff-Schlauch unten abgeklemmt wird,

b) dieser Schlauch durch die Öffnung des unterhalb des Extrusionskopfes positionierten äußeren Behälters hindurch in diesen Behälter hineingeführt wird,

c) der Schlauch oberhalb des Behälters abgetrennt wird,

d) der Behälter zusammen mit dem Schlauch unterhalb einer Blasformstation der Blasanlage positioniert wird,

e) ein Blasdorn der Blasformstation in den oben offenen Schlauch eingeführt wird,

f) der Schlauch gegen die Wandung des äußeren Behälters hin aufgeblasen wird,

g) der Schlauch abgetrennt und der Blasdorn aus der Öffnung wieder herausgezogen wird,

h) die Verfahrensschritte a - g entsprechend der die Zahl "2" übersteigenden Anzahl von gewünschten Schichten der Außenwandung eines Hohlkörpers wiederholt werden.

2. Verfahren zum Herstellen eines Hohlkörpers mit mehrschichtiger Außenwandung und zumindest einer Öffnung aus thermoplastischem Kunststoff, bei dem der innere Behälter nach dem Blasverfahren hergestellt wird,

d a d u r c h   g e k e n n z e i c h n e t ,   daß nacheinander

a) ein aus einem ersten Extrusionskopf der Blasanlage ausgetretener erster Kunststoff-Schlauch von Formteilen umschlossen wird, wobei beim Schließen der Formteile das untere Ende des Schlauches zusammengequetscht wird,

0189750

b) dieser erste Schlauch oberhalb der Formteile abgetrennt wird,

c) dieser erste Schlauch zusammen mit den Formteilen unterhalb einer ersten Blasformstation der Blasanlage
positioniert wird,

d) ein Blasdorn der ersten Blasformstation in den oben
offenen ersten Schlauch eingeführt wird,

e) der erste Schlauch gegen die Formteile hin aufgeblasen
wird,

f) die Formteile den zu einem Behälter geblasenen ersten
Schlauch freigeben,

g) dieser Behälter abgetrennt und der Blasdorn aus dessen
Öffnung wieder herausgezogen wird,

h) das an diesem Behälter hängende, überschüssige Kunststoffmaterial abgetrennt wird,

i) ein aus einem zweiten Extrusionskopf der Blasanlage
ausgetretener zweiter Kunststoff-Schlauch unten abgeklemmt wird,

j) dieser zweite Schlauch durch die Öffnung des unterhalb des zweiten Extrusionskopfes positionierten, zuvor hergestellten Behälters eingeführt wird,

k) der zweite Schlauch oberhalb des Behälters abgetrennt
wird,

l) der Behälter zusammen mit dem zweiten Schlauch unterhalb einer zweiten Blasformstation der Blasanlage positioniert wird,

m) ein Blasdorn dieser zweiten Blasformstation in den
oben offenen zweiten Schlauch eingeführt wird,

n) der zweite Schlauch gegen die Wandung des Behälters
hin aufgeblasen wird,

o) der zweite Schlauch abgetrennt und der Blasdorn der
zweiten Blasformstation aus der Öffnung wieder herausgezogen wird,

p) die Verfahrensschritte i - o entsprechend der die
Zahl "2" übersteigenden Anzahl von gewünschten
Schichten der Außenwandung eines Hohlkörpers wiederholt werden.

0189750

3.  Verfahren nach Anspruch 1 oder 2,
    d a d u r c h   g e k e n n z e i c h n e t ,   daß
    zumindest während der Zeit, in der ein Schlauch gegen
    die Wandung eines Behälters hin aufgeblasen wird, dieser
    Behälter gehalten wird.

4.  Verfahren nach Anspruch 3,
    d a d u r c h   g e k e n n z e i c h n e t ,   daß
    zum Halten des Behälters der äußeren Form des Hohlkörpers
    angepaßte Formteile verwendet werden.

5.  Verfahren nach Anspruch 1 oder 2,
    d a d u r c h   g e k e n n z e i c h n e t ,   daß
    unter Verzicht auf Merkmal a des Anspruchs 1 oder i des
    Anspruchs 2 statt des Schlauches ein an seinem unteren
    Ende verschlossener Kunststoff-Vorformling verwendet
    wird.

6.  Verfahren nach Anspruch 1 oder 2,
    d a d u r c h   g e k e n n z e i c h n e t ,   daß
    der Öffnungsrand eines der inneren Behälter mit einem
    Außengewinde versehen wird.

7.  Verfahren nach Anspruch 1 oder 2,
    d a d u r c h   g e k e n n z e i c h n e t ,   daß
    vor dem Herstellen eines inneren Behälters auf die Innenseite des äußeren Behälters zumindest teilweise eine
    Schicht aufgebracht wird, die entweder ein Aneinanderhaften der betreffenden beiden ineinandergeschachtelten Behälter fördert oder hindert.

8.  Verfahren nach einem der Ansprüche 1 bis 7,
    d a d u r c h   g e k e n n z e i c h n e t ,   daß
    der für den inneren Behälter vorgesehene Kunststoff-
    schlauch so aus dem Extrusionskopf herausextrudiert wird,
    daß seine Wandstärke während des Extrudiervorganges auf
    einen bestimmten Wert hin zunimmt.

9. Verfahren nach einem der Ansprüche 1 bis 8,
d a d u r c h   g e k e n n z e i c h n e t ,   daß
der aus dem Extrusionskopf austretende Kunststoffschlauch
durch eine entsprechend geformte Extrusionsdüse auf seiner Außen- und/oder Innenfläche mit in Extrusionsrichtung
verlaufenden rillenartigen Vertiefungen versehen wird.

10. Verfahren nach einem der Ansprüche 1 bis 9,
d a d u r c h   g e k e n n z e i c h n e t ,   daß
beim Herstellen des inneren Behälters in seine noch plastisch verformbare Oberfläche an einer von außen zugänglichen Stelle ein magnetisierbares Teilchen so mit eingeformt wird, daß das Teilchen an dem inneren Behälter
befestigt und gleichzeitig mit einem Teil seiner Oberfläche von außen frei zugänglich ist.

11. Blasdorn mit zentrisch in ihm angeordnetem Luftzuführkanal zum Ausführen des Verfahrens nach einem der Ansprüche
1 bis 10,
d a d u r c h   g e k e n n z e i c h n e t ,   daß
zumindest ein weiterer Kanal im Blasdorn vorhanden ist,
der mit seinem einen Ende in Stichleitungen endet, die
quer durch den Dorn hindurch nach außen führen und der
mit seinem anderen Ende mit einer Einrichtung zum Ansaugen von Luft verbunden ist.

12. Blasdorn nach Anspruch 11,
d a d u r c h   g e k e n n z e i c h n e t ,   daß
die Stichleitungen in zumindest einer Ringleitung enden,
die mit dem weiteren Kanal verbunden ist.

Fig.1

Fig.2

Fig.3

Fig.4

0189750

Fig.5

Fig.6

Fig.7

Fig.8

Fig.9

Fig.13

Fig.10

Fig.12

Fig.11